# EUROPEAN PATENT APPLICATION

(11) **EP 4 607 993 A1**
(43) Date of publication of application: **27.08.2025**
(21) Application number: 23884376.7
(22) Date of filing: 15.08.2023
(51) Int. Cl.: H04W 24/02

(54) **INFORMATION SENDING METHOD AND APPARATUS, INFORMATION RECEIVING METHOD AND APPARATUS, FUNCTIONAL MODULE UPDATING METHODS AND APPARATUS**

(30) Priority: 04.11.2022 CN 202211389621
(71) Applicant: ZTE CORPORATION, Shenzhen, Guangdong 518057 (CN)
(72) Inventor: LU, Zhaohua, Shenzhen, Guangdong 518057 (CN); LIU, Kun, Shenzhen, Guangdong 518057 (CN); ZHENG, Guozeng, Shenzhen, Guangdong 518057 (CN); XIAO, Huahua, Shenzhen, Guangdong 518057 (CN)
(74) Representative: Deambrogi, Edgardo
(86) International application number: PCT/CN2023/113180
(87) International publication number: WO 2024/093437

(57) **Abstract**

The embodiments of the present disclosure provide an information sending and receiving method and device, and a function module update method and device. Information of a first function module is sent to a second node or a third node by means of the first node.

## Description

### Technical Field

The embodiments of the present disclosure relate to the field of communications, and in particular, to an information sending method and device, an information receiving method and device, and function module update methods and devices.

### Background

The large-scale commercial application of the new radio (NR) of the 5th generation mobile communication system (5G) accelerates the transformation of the economic society to digitalization, network and intelligence, and pushes the network to be interconnected with the new era crossing. The development trend of the rapidly emerging smart city, smart transportation and smart industrial production, etc. is continuously increasing, further promoting the emergence of a 6th generation mobile communication system (6G). In a typical 6G application scenario, represented by smart city, smart transportation, and smart home, there are a large number of smart automation devices with highly differentiated capabilities. The communication requirements are more stringent in terms of ultra-low delay, ultra-high reliability, ultra-large bandwidth and massive access. The intelligent automation type applications also require high precision and high resolution in terms of sensing capability. On the one hand, the dramatically increased number of wireless communication and sensing devices makes the continuous growth of service demands more and more contradictory to the limitation of wireless resources and computing power; on the other hand, the implementation of the 6G vision requires closed-loop information stream processing of layer-by-layer distribution by means of environmental perception information acquisition, information interaction and sharing, intelligent information processing, to control information (including control information on a communication network and control instructions of an application execution device). Existing wireless network architectures and related technologies are struggling to meet the application requirements emerging in the 5G and Beyond (B5G)/6G era. There is an urgent need to develop new network architectures and enabling technologies that can efficiently utilize resources and intelligently adapt to differentiated applications. To meet the data transmission requirements of different types of UEs and improve spectral efficiency, a terminal-oriented data channel generation method is provided.

### Summary

The embodiments of the present disclosure provide an information sending and receiving method and device, and a function module update method and device, so as to at least solve the problem in the related art of low data transmission efficiency due to different types of terminals.

According to one embodiment of the present disclosure, provided is an information sending method, comprising: a first node sending information of a first function module to a second node or a third node.

According to another embodiment of the present disclosure, provided is an information receiving method, comprising: the second node or the third node receiving the information of the first function module from the first node.

According to another embodiment of the present disclosure, provided is a function module update method, comprising: a first node sending function module update request information to a third node; and the first node receiving response information from the third node, so as to make an update decision according to the response information.

According to yet another embodiment of the present disclosure, provided is a function module update method, comprising: a third node receiving function module update request information from a first node; and the third node sending response information to the first node, so that the first node makes an update decision according to the response information.

According to another embodiment of the present disclosure, provided is an information sending device, comprising: a statistical information sending module configured to send statistical information of a first function module to a second node or a third node.

According to yet another embodiment of the present disclosure, provided is an information receiving device, comprising: an information receiving module configured to receive information of a first function module from a first node.

According to yet another embodiment of the present disclosure, provided is a function module update device, comprising: an update request sending module configured to send function module update request information to a third node; and a response information receiving module, configured to receive response information from the third node.

According to yet another embodiment of the present disclosure, provided is a function module update device, comprising: an update request receiving module, configured to receive function module update request information from a first node of user equipment; and a response information sending module, configured to send response information to the first node, so that the first node makes an update decision according to the response information.

According to yet another embodiment of the present disclosure, further provided is a computer readable storage medium storing a computer program, wherein the computer program is configured to execute, when running, the steps in any one of the described method embodiments.

According to yet another embodiment of the present disclosure, further provided is an electronic device, comprising a memory and a processor; the memory stores a computer program, and the processor is configured to run the computer program so as to execute the operations in any one of the described method embodiments.

### Brief Description of the Drawings

Fig. 1 is a hardware structure block diagram of a mobile terminal of an information sending method according to an embodiment of the present disclosure;
Fig. 2 is a flowchart of an information sending method according to an embodiment of the present disclosure;
Fig. 3 is a flowchart of an information receiving method according to an embodiment of the present disclosure;
Fig. 4 is a flowchart of a function module update method according to an embodiment of the present disclosure;
Fig. 5 is a flowchart of a function module update method according to an embodiment of the present disclosure;
Fig. 6 is a flowchart of a function module update method according to an embodiment of the present disclosure;
Fig. 7 is a flowchart of a function module update method according to an embodiment of the present disclosure;
Fig. 8 is a flowchart of a function module update method according to an embodiment of the present disclosure;
Fig. 9 is a flowchart of a function module update method according to an embodiment of the present disclosure;
Fig. 10 is a structural block diagram of an information sending device according to an embodiment of the present disclosure;
Fig. 11 is a structural block diagram of an information sending device according to an embodiment of the present disclosure;
Fig. 12 is a structural block diagram of an information receiving device according to an embodiment of the present disclosure;
Fig. 13 is a structural block diagram of an information receiving device according to an embodiment of the present disclosure;
Fig. 14 is a structural block diagram of a function module update device according to an embodiment of the present disclosure;
Fig. 15 is a structural block diagram of a function module update device according to an embodiment of the present disclosure;
Fig. 16 is a structural block diagram of a function module update device according to an embodiment of the present disclosure;
Fig. 17 is a structural block diagram of a function module update device according to an embodiment of the present disclosure;
Fig. 18 is a structural block diagram of a function module update device according to an embodiment of the present disclosure;
Fig. 19 is a structural block diagram of a function module update device according to an embodiment of the present disclosure;
Fig. 20 is a structural block diagram of a function module update device according to an embodiment of the present disclosure;
Fig. 21 is a structural block diagram of a function module update device according to an embodiment of the present disclosure;
Fig. 22 is a schematic diagram illustrating the principle of a function module update method according to a scenario embodiment of the present disclosure;
Fig. 23 is a schematic diagram illustrating the principle of a function module update method according to a scenario embodiment of the present disclosure.

### Detailed Description of the Embodiments

The embodiments of the present disclosure are described in detail with reference to the accompanying drawings and in conjunction with the embodiments.

It should be noted that the terms "first", "second" etc. in the description, claims, and accompanying drawings of the embodiments of the present disclosure are used to distinguish similar objects, and are not necessarily used to describe a specific sequence or order.

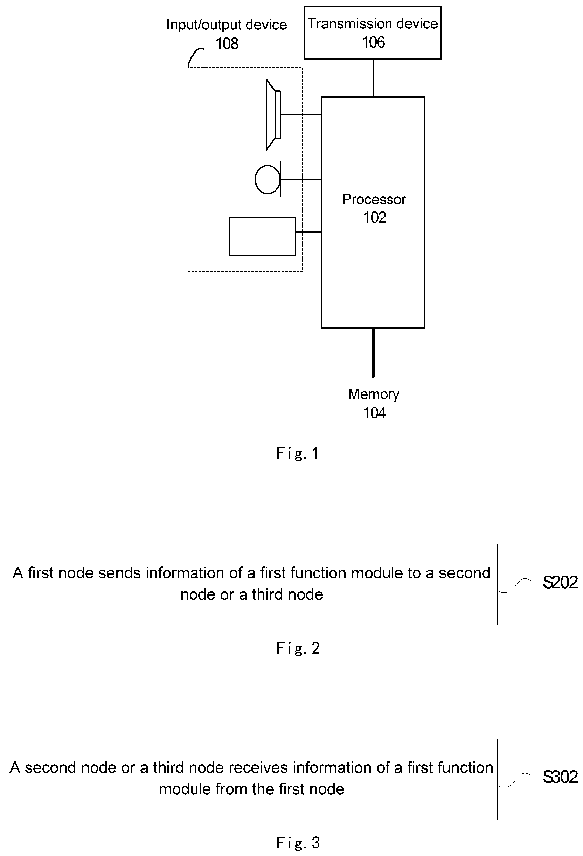

Method embodiments provided in the embodiments of the present disclosure may be executed in a mobile terminal, a computer terminal, or similar computing apparatuses. Taking the mobile terminal running as an example, Fig. 1 is a hardware structure block diagram of a mobile terminal of an information sending method according to an embodiment of the present disclosure. As shown in Fig. 1, the mobile terminal may include one or more (only one is shown in Fig. 1) processors 102 (the processors 102 may include, but are not limited to, a microprocessor MCU or a processing device such as a programmable logic device FPGA) and a memory 104 configured to store data, wherein the mobile terminal can further include a transmission device 106 for a communication function and an input/output device 108. Those ordinarily skilled in the art can appreciate that the structure shown in Fig. 1 is for illustrative purposes only, but not limit the structure of the mobile terminal. For example, the mobile terminal may also include more or fewer components than that shown in Fig. 1, or have a different configuration than that shown in Fig. 1.

The memory 104 may be configured to store a computer program, for example, a software program and a module of application software, such as a computer program corresponding to the information sending method in the embodiment of the present invention. The processor 102 runs the computer program stored in the memory 104, so as to execute various function applications and data processing, that is, to implement the foregoing method. The memory 104 may include a high-speed random access memory, and may also include a non-transitory memory, such as one or more magnetic storage apparatuses, flash memories, or other non-transitory solid-state memories. In some instances, the memory 104 may further include memories remotely arranged with respect to the processor 102, and these remote memories may be connected to the mobile terminal over a network. Examples of the described network include, but are not limited to the Internet, an intranet, a local area network, a mobile communication network, and a combination thereof.

The transmission device 106 is configured to receive or transmit data by a network. Specific examples of the described network may include a wireless network provided by a communication provider of the mobile terminal. In one example, the transmission device 106 includes a network interface controller (NIC) which may be connected to other network devices by means of a base station, thereby being able to communicate with the Internet. In one example, the transmission device 106 may be a radio frequency (RF) module for communicating wirelessly with the Internet.

In the NR of the fifth generation mobile communication system, the system information transmits a master information block (MIB) by means of a synchronization signal and a PBCH block (SSB), and then carries a system information block (SIB) by means of a physical downlink shared channel (PDSCH). The SIB may be divided into a plurality of blocks, each of which bears different system information. In a typical 6G application scenario, represented by smart city, smart transportation, and smart home, there are a large number of smart automation devices with highly differentiated capabilities. The communication requirements are more stringent in terms of ultra-low delay, ultra-high reliability, ultra-large bandwidth and massive access. That is, the types of terminals in an access system in the 6G era will be very diverse, and a data channel generation method using a limited combination of NRs will severely limit the data transmission efficiency of the terminals and also affect the spectral efficiency of the system. There is a need for a terminal-oriented data channel generation method, which satisfies data transmission requirements of different types of UEs and improves the spectrum efficiency.

With the rise of artificial intelligence (AI) technologies represented by deep learning, reinforcement learning, distributed learning, etc., broad and deep impacts are occurring in various fields such as communication network optimization, intelligent perception and control application, and the possibility of deep fusion in the field of communication-perception-computation is greatly promoted. Based on this, if 6G achieves the integration and coexistence of communication and perception capabilities enabled by intelligent computing technology, it will give the 6G network the ability to intelligently perceive the physical world and mirror the digital world anytime, anywhere. The vast number of newly connected smart terminals will rely on ever-increasing computing power to learn, communicate, cooperate and compete. This will enable the network to achieve self-learning, self-operation and self-maintenance, realizing the vision of an integrated network of communication, perception and computation in 6G.

The present embodiment provides an information sending method running on the mobile terminal. Fig. 2 is a flowchart of an information sending method according to an embodiment of the present disclosure. As shown in Fig. 2, the flow includes the following steps:
step S202: a first node sends information of a first function module to a second node or a third node. By means of the described step, an information sending method is provided. Information of a first function module is sent to a second node or a third node by means of a first node, thereby solving the problem in the related art of low data transmission efficiency of a terminal caused by using a data channel generation method with a limited number of NRs in cases where the number of terminals is large, and achieving the effect of improving the data transmission efficiency.

An execution subject of the described steps may be a base station, but is not limited thereto.

In an exemplary embodiment, the second node comprises at least one of the following: a transport/receive point (TRP); and a group of TRPs; the third node comprises at least one of the following: an artificial intelligence (AI) server; a group of AI servers; an Al memory device; a group of Al memory devices; a node having a database/server/memory function; and a group of nodes with a database/server/memory function.

In a specific embodiment, the first node may be a user equipment (UE). The second node or the third node may be one or a group of transport/receive point (TRP) or base stations, or the second node or the third node may be one or a group of AI servers.

In a specific embodiment, the second node or the third node has the same identification information. In a specific embodiment, the described identification information comprises at least one of the following: a Cell ID; a Group ID; and a Zone ID.

In an exemplary embodiment, the information of the first function module includes at least one of the following: instruction information of at least one of first function module sets; statistical information of the first function modules in one of the sets; wherein the statistical information of the first function modules in one of the sets may comprise at least one of the following: quantity information of the first function modules; function information supported by the first function modules; version information of the first function modules; index information of the first function modules; and acquisition mode information of the first function modules.

In a specific embodiment, the set indication information of the first function module is used for dividing the first function module into at least one set on the basis of a predetermined or determined principle, wherein the predetermined or determined principle may comprise at least one of the following: functions implemented by the first function module; the version number of the first function module; index information of the first function module; and the storage address of the first function module; hardware and/or software configuration being included in the first function module.

The first function module may be an Al module, and the corresponding Al module set indication information is used for dividing the Al module into at least one set on the basis of a predetermined or determined principle, wherein the predetermined or determined principle may comprise at least one of the following: functions implemented by the Al module; the version number of the Al module; index information of the Al module; and the storage address of the Al module; hardware and/or software configuration being included in the Al module.

In an exemplary embodiment, the information of the first function module includes at least one of the following: quantity information of the first function module; function information supported by the first function module; version information of the first function module; index information of the first function module; and acquisition mode information of the first function module.

In a specific embodiment, when the information of the first function modules is sent, the first function modules may be divided to obtain different sets of the first function modules, and then the statistical information of the first function modules in each set is sent. Alternatively, the statistical information of each first function module may be directly sent without performing set division.

In an exemplary embodiment, the first function module set and/or the first function module satisfies a first condition, the first condition comprising at least one of the following: the second node or the third node supports the first function module set and/or the first function module; the identification information corresponding to the first function module set and/or the first function module is the same as identification information corresponding to the second node or the third node; the identification information corresponding to the first function module set and/or the first function module is the same as identification information corresponding to first function module set and/or first function module supported by the second node or the third node; the identification information corresponding to the first function module set and/or the first function module is a subset of the identification information corresponding to the second node or the third node; the identification information corresponding to the first function module set and/or the first function module is a subset of the identification information corresponding to the first function module set and/or the first function module supported by the second node or the third node; the identification information corresponding to the first function module set and/or the first function module and the identification information corresponding to the second node or the third node are in the same identification information set; and the identification information corresponding to the first function module set and/or the first function module and the identification information corresponding to the first function module set and/or the first function module supported by the second node or the third node are in the same identification information set.

In an exemplary embodiment, the trigger condition for the first node to send the information of the first function module to the second node or the third node comprises at least one of the following: the second node or the third node requesting the first node to send the information of the first function module; the first node sending the information of the first function module; configuring, by means of signaling, the timing and/or the channel resources used for sending the information of the first functional module; and the first node sending the information of the first function module when performing a switching operation.

In a specific embodiment, the trigger condition for sending the first function module is optional, the first node itself may actively report the trigger condition, and other trigger conditions may also be set. When the trigger condition is initiated by the second node or the third node, the second node or the third node sends instruction information to the first node, and requests the first node to send the statistical information of the first function module.

In an exemplary embodiment, the first node sending the information of the first function module when performing a switching operation, and the first function module set and/or the first function module sent by the first node satisfies a second condition, the second condition comprising at least one of the following: the switched target second node or third node supports the first function module set and/or the first function module; the identification information corresponding to the first function module set and/or the first function module is the same as identification information corresponding to the switched target second node or the third node; the identification information corresponding to the first function module set and/or the first function module is the same as identification information corresponding to first function module set and/or first function module supported by the switched target second node or the third node; the identification information corresponding to the first function module set and/or the first function module is a subset of the identification information corresponding to the switched target second node or the third node; the identification information corresponding to the first function module set and/or the first function module is a subset of the identification information corresponding to the first function module set and/or the first function module supported by the switched target second node or the third node; the identification information corresponding to the first function module set and/or the first function module and the identification information corresponding to the target second node or third node are in the same identification information set; and the identification information corresponding to the first function module set and/or the first function module and the identification information corresponding to the first function module set and/or the first function module supported by the target second node or third node are in the same identification information set.

In one exemplary embodiment, completing the downloading, updating or storing of the second function module according to a first principle in cases where the storage space of the first node is insufficient for completing the downloading, updating or storing of the second function module by the first node, the first principle comprising at least one of the following: sorting the first function modules according to the size of a storage space occupied by an existing first function module, and deleting at least one first function module ranked top, so as to complete the downloading, updating or storing of the second function modules; sorting the first function modules according to the usage degree of an existing first function module, and deleting at least one first function module ranked top, so as to complete the downloading, updating or storing of the second function modules; deleting at least one first function module or first function module set not satisfying the first condition, so as to complete the downloading, updating or storing of the second function modules; and preferentially deleting, according to the downloading, updating or storing time of the existing first function module, a first function module which has the longest time.

In a specific embodiment, the second function module may be an Al module or other function modules.

In a specific embodiment, the sorting can be performed in a descending order or in an ascending order according to the size of the storage space occupied by the first function module.

In a specific embodiment, when sorting is performed according to the usage degrees of the existing first function modules or sorting is performed according to the usage duration, sorting is generally performed from low to high, and then the first function module ranked at the top, that is, the first function module with the smallest usage degree or the shortest usage duration can be deleted. If sorting is performed in a descending order, the first function module ranked last needs to be deleted, that is, the first function module with the smallest usage degree or the shortest usage duration needs to be deleted. During deletion, the deletion quantity is determined according to actual situations, and at least one or more may be deleted.

Another embodiment of the present disclosure provides an information receiving method. Fig. 3 is a flowchart of an information receiving method according to an embodiment of the present disclosure. As shown in Fig. 3, the method includes the following steps:
Step S302: a second node or a third node receives information of a first function module from the first node.

In an exemplary embodiment, the second node comprises at least one of the following: a transport/receive point (TRP); and a group of TRPs;
the third node comprises at least one of the following: an artificial intelligence (AI) server; a group of Al servers; an Al memory device; a group of Al memory devices; a node having a database/server/memory function; and a group of nodes with a database/server/memory function.

In an exemplary embodiment, the information of the first function module includes at least one of the following: instruction information of at least one of first function module sets; statistical information of the first function modules in one of the sets; wherein the statistical information of the first function modules in one of the sets may comprise at least one of the following: quantity information of the first function modules; function information supported by the first function modules; version information of the first function modules; index information of the first function modules; and acquisition mode information of the first function modules.

In an exemplary embodiment, the information of the first function module includes at least one of the following: quantity information of the first function module; function information supported by the first function module; version information of the first function module; index information of the first function module; and acquisition mode information of the first function module.

In an exemplary embodiment, the first function module set and/or the first function module satisfies a first condition, the first condition comprising at least one of the following: the second node or the third node supports the first function module set and/or the first function module; the identification information corresponding to the first function module set and/or the first function module is the same as identification information corresponding to the second node or the third node; the identification information corresponding to the first function module set and/or the first function module is the same as identification information corresponding to first function module set and/or first function module supported by the second node or the third node; the identification information corresponding to the first function module set and/or the first function module is a subset of the identification information corresponding to the second node or the third node; the identification information corresponding to the first function module set and/or the first function module is a subset of the identification information corresponding to the first function module set and/or the first function module supported by the second node or the third node; the identification information corresponding to the first function module set and/or the first function module and the identification information corresponding to the second node or the third node are in the same identification information set; and the identification information corresponding to the first function module set and/or the first function module and the identification information corresponding to the first function module set and/or the first function module supported by the second node or the third node are in the same identification information set.

In an exemplary embodiment, the trigger condition for the second node or third node to receive the information of the first function module from the first node comprises at least one of the following: the second node or the third node requiring the first node to send the information of the first function module; the first node sending the information of the first function module; configuring, by means of signaling, the timing and/or the channel resources used for sending the information of the first functional module; and the first node sending the information of the first function module when performing a switching operation.

In an exemplary embodiment, the first node sending the information of the first function module when performing a switching operation, and the first function module set and/or the first function module sent by the first node satisfies a second condition, the second condition comprising at least one of the following: the switched target second node or third node supports the first function module set and/or the first function module; the identification information corresponding to the first function module set and/or the first function module is the same as identification information corresponding to the switched target second node or the third node; the identification information corresponding to the first function module set and/or the first function module is the same as identification information corresponding to first function module set and/or first function module supported by the switched target second node or the third node; the identification information corresponding to the first function module set and/or the first function module is a subset of the identification information corresponding to the switched target second node or the third node; the identification information corresponding to the first function module set and/or the first function module is a subset of the identification information corresponding to the first function module set and/or the first function module supported by the switched target second node or the third node; the identification information corresponding to the first function module set and/or the first function module and the identification information corresponding to the target second node or third node are in the same identification information set; and the identification information corresponding to the first function module set and/or the first function module and the identification information corresponding to the first function module set and/or the first function module supported by the target second node or third node are in the same identification information set.

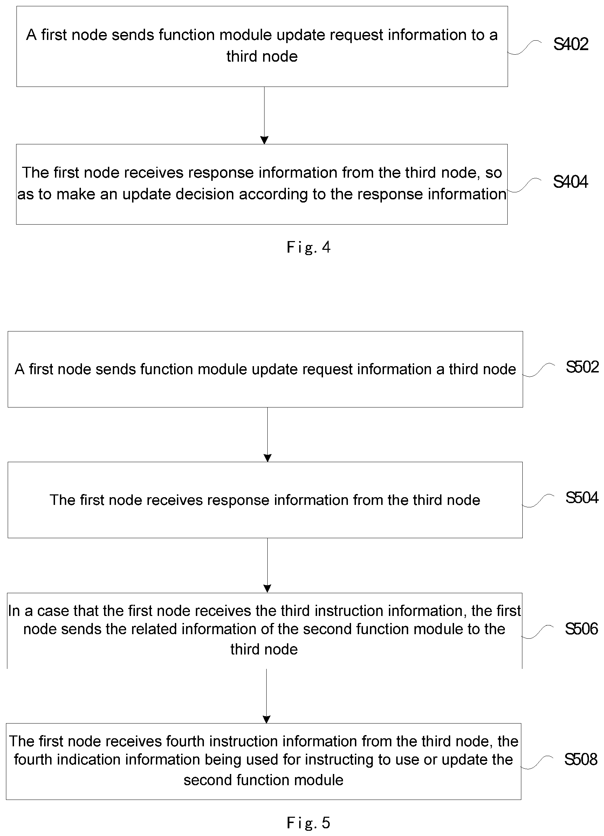

Another embodiment of the present disclosure provides a function module update method. Fig. 4 is a flowchart of a function module update method according to an embodiment of the present disclosure. As shown in Fig. 4, the flow comprises the following steps:
step S402: a first node sends function module update request information to a third node; and
step S404: the first node receives response information from the third node, so as to make an update decision according to the response information.

In a specific embodiment, the first node comprises at least one of the following: a terminal which is registered, authorized or authenticated in the third node or the second node; and terminals that are allowed to use the function module at the third node or the second node.

In an exemplary embodiment, the third node comprises at least one of the following: an artificial intelligence (AI) server; a group of Al servers; an Al memory device; a group of Al memory devices; a node having a database/server/memory function; and a group of nodes with a database/server/memory function.

In an exemplary embodiment, a first node sending function module update request information to a third node comprises: the first node forwarding the function module update request information to the third node by means of the second node; or the first node directly sending the function module update request information to the third node.

In an exemplary embodiment, the second node comprises at least one of the following: a transport/receive point (TRP); and a group of TRPs;

In a specific embodiment, the third node and the second node may be in the same entity, and may also be separated in different entities. One third node may correspond to a plurality of second nodes, that is, one third node may perform information interaction with a plurality of second nodes; the third node may be an Al server, or an Al memory device, or a node with a database/server/memory function.

In an exemplary embodiment, the function module update request information comprises at least one of the following: configuration information of the first function module and configuration information of the second function module, the configuration information of the first function module comprising at least one of the following: the version number of the first function module; and description information of the function implemented by the first function module; and the configuration information of the second function module comprising at least one of the following: the version number of the second function module; and description information of the function implemented by the second function module.

In a specific embodiment, the first function module is used to represent a function module that is currently in use, and the second function module is used to represent a function module that is to be used or updated.

In a specific embodiment, the third node can obtain the implementation of the second function module according to the constitution information of the second function module, wherein the third node can be an Al server, i.e., the Al server can obtain the implementation of the second function module according to the constitution information of the second function module.

In an exemplary embodiment, the description information of the function implemented by the first function module comprises at least one of the following: terminal type information supported by the first function module; system configuration information required by the first function module and supported by the terminal; communication configuration information required by the first function module and supported by the terminal; input information required by the first function module; and output information supported by the first function module;
the description information of the function implemented by the second function module comprises at least one of the following: terminal type information supported by the second function module; system configuration information required by the second function module and supported by the terminal; communication configuration information required by the second function module and supported by the terminal; input information required by the second function module; and output information supported by the second function module.

In a specific embodiment, the system configuration information required by the first function module and supported by the terminal, or the system configuration information required by the second function module and supported by the terminal may comprise: hardware or software configuration information of the terminal.

In a specific embodiment, the communication configuration information required by the first function module and supported by the terminal, or the communication configuration information required by the first function module and supported by the terminal may comprise: communication frequency domain resource information; frame structure information; transmission power information; supported wireless communication protocol information; supported channel coding information; supported source coding information; supported MIMO processing mode; supported receiver detection algorithm, etc.

In a specific embodiment, the input information required by the first function module or the input information required by the second function module may include a plurality of input formats. Still further, an input format may include at least one piece of input information or at least one input parameter.

In a specific embodiment, the output information supported by the first function module or the output information supported by the second function module may include a plurality of output formats. Still further, an output format may include at least piece of one output information or at least one output result.

In a specific embodiment, there is a correlation between the input information and the output information.

In a specific embodiment, the described corresponding relationship comprises at least one of the following: an input format corresponding to the least one output format; an output format corresponding to at least one input format; and at least one input format corresponding to at least one output format.

In an exemplary embodiment, the response information comprises one of: first instruction information for instructing to use or update the second function module; second instruction information for instructing to not use or update the second function module; and third instruction information for instructing the first node to send related information of the second function module.

In a specific embodiment, the first instruction information further comprises usage/update time indication information.

In an exemplary embodiment, the related information comprises at least one of the following: security authentication information; institution authentication information; and evaluation information.

In an exemplary embodiment, before the first node makes an update decision according to the response information, the method further comprises: if the first node receives the third instruction information, the first node sending the related information of the second function module to the third node; and the first node receiving fourth instruction information from the third node, the fourth indication information being used for instructing to use or update the second function module. Fig. 5 is a flowchart of a function module update method according to an embodiment of the present disclosure. As shown in Fig. 5, the method comprises the following steps:
step S502: a first node sends function module update request information a third node;
step S504: the first node receives response information from the third node;
step S506: if the first node receives the third instruction information, the first node sends the related information of the second function module to the third node; and
step S508: the first node receives fourth instruction information from the third node, the fourth indication information being used for instructing to use or update the second function module.

In an exemplary embodiment, the function module update request information comprises at least one of the following: configuration information of the first function module and configuration information of the second function module, the configuration information of the first function module comprising at least one of the following: the version number of the first function module; and description information of the function implemented by the first function module;
the configuration information of the second function module comprising at least one of the following: the version number of the second function module; and description information of the function implemented by the second function module.

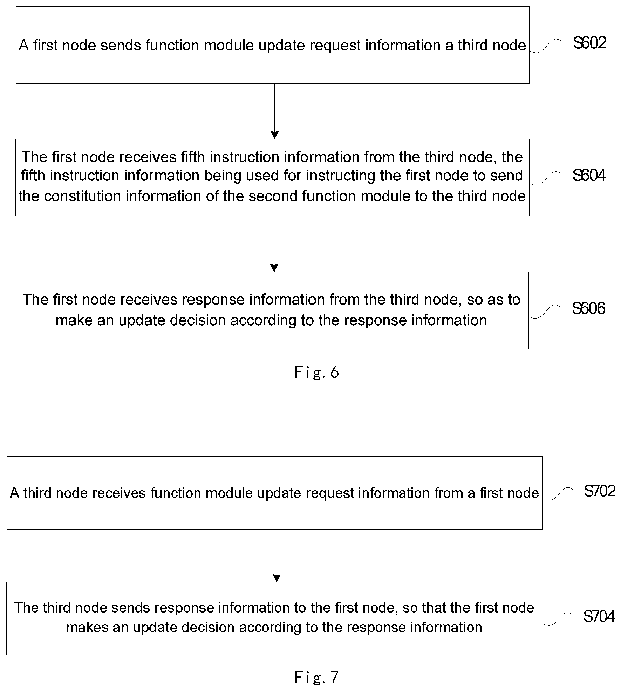

In an exemplary embodiment, before the first node receives the response information from the third node, the method further comprises: the first node receiving fifth instruction information from the third node, the fifth instruction information being used for instructing the first node to send the constitution information of the second function module to the third node. Fig. 6 is a flowchart of a function module update method according to an embodiment of the present disclosure. As shown in Fig. 6, the method comprises the following steps:
step S602: a first node sends function module update request information a third node;
step S604: the first node receives fifth instruction information from the third node, the fifth instruction information being used for instructing the first node to send the constitution information of the second function module to the third node;
step S606: the first node receives response information from the third node, so as to make an update decision according to the response information.

In a specific embodiment, after the first node sends the constitution information of the second function module to the third node, the response information received by the first node from the third node still has three possibilities, i.e. the first instruction information or the second instruction information or the third instruction information.

In an exemplary embodiment, the first node making an update decision according to the response information comprises: after receiving the response information for a certain time interval, the first node making an update decision according to the response information, the time interval being configured by default, or being configured by the third node, or being carried by the response information.

According to yet another embodiment of the present disclosure, also provided is a function module update method. Fig. 7 is a flowchart of a function module update method according to an embodiment of the present disclosure. As shown in Fig. 7, the flow comprises the following steps:
step S702: a third node receives function module update request information from a first node; and
step S704: the third node sends response information to the first node, so that the first node makes an update decision according to the response information.

In an exemplary embodiment, the third node comprises at least one of the following: an artificial intelligence (AI) server; a group of Al servers; an Al memory device; a group of Al memory devices; a node having a database/server/memory function; and a group of nodes with a database/server/memory function.

In an exemplary embodiment, the third node receiving the function module update request information from the first node comprises: the third node receiving the function module update request information from the first node by means of a second node; or the third node directly receiving the function module update request information from the first node.

In an exemplary embodiment, the function module update request information comprises at least one of the following: configuration information of the first function module and configuration information of the second function module, the configuration information of the first function module comprising at least one of the following: the version number of the first function module; and description information of the function implemented by the first function module;
the configuration information of the second function module comprising at least one of the following: the version number of the second function module; and description information of the function implemented by the second function module.

In an exemplary embodiment, the response information comprises one of: first instruction information for instructing to use or update the second function module; second instruction information for instructing to not use or update the second function module; and third instruction information for instructing the first node to send related information of the second function module.

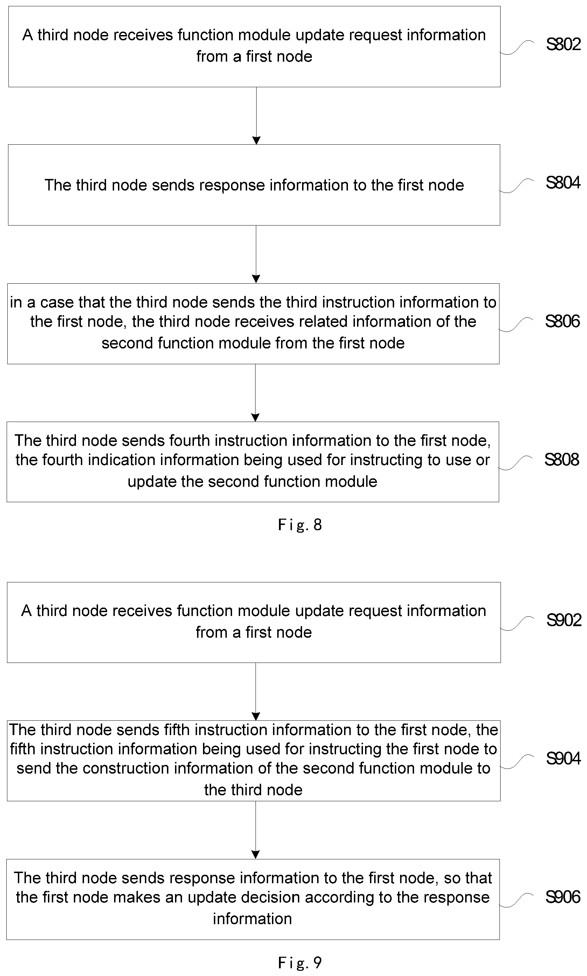

In an exemplary embodiment, after the third node sends the response information to the first node, the method further comprises: if the third node sends the third instruction information to the first node, the third node receiving related information of the second function module from the first node; and the third node sending fourth instruction information to the first node, the fourth indication information being used for instructing to use or update the second function module. Fig. 8 is a flowchart of a function module update method according to an embodiment of the present disclosure. As shown in Fig. 8, the method comprises the following steps:
step S802: a third node receives function module update request information from a first node;
step S804: the third node sends response information to the first node;
step S806: if the third node sends the third instruction information to the first node, the third node receives related information of the second function module from the first node; and
step S808: the third node sends fourth instruction information to the first node, the fourth indication information being used for instructing to use or update the second function module.

In an exemplary embodiment, the function module update request information comprises at least one of the following: configuration information of the first function module and configuration information of the second function module, the configuration information of the first function module comprising at least one of the following: the version number of the first function module; and description information of the function implemented by the first function module; and the configuration information of the second function module comprising at least one of the following: the version number of the second function module; and description information of the function implemented by the second function module.

In an exemplary embodiment, before the third node sends the response information to the first node, the method further comprises: the third node sending fifth instruction information to the first node, the fifth instruction information being used for instructing the first node to send the construction information of the second function module to the third node. Fig. 9 is a flowchart of a function module update method according to an embodiment of the present disclosure. As shown in Fig. 9, the method comprises the following steps:
step S902: a third node receives function module update request information from a first node;
step S904: the third node sends fifth instruction information to the first node, the fifth instruction information being used for instructing the first node to send the construction information of the second function module to the third node; and
step S906: the third node sends response information to the first node, so that the first node makes an update decision according to the response information.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the embodiments of the present disclosure, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

The present embodiment further provides an information sending device, the device is used for implementing the embodiments and preferred embodiments above, and what has been described will not be described repeatedly here. As used below, the term "module" may implement a combination of software and/or hardware of predetermined functions. Although the apparatus described in the following embodiments is preferably implemented in software, implementation in hardware or a combination of software and hardware is also possible and conceived.

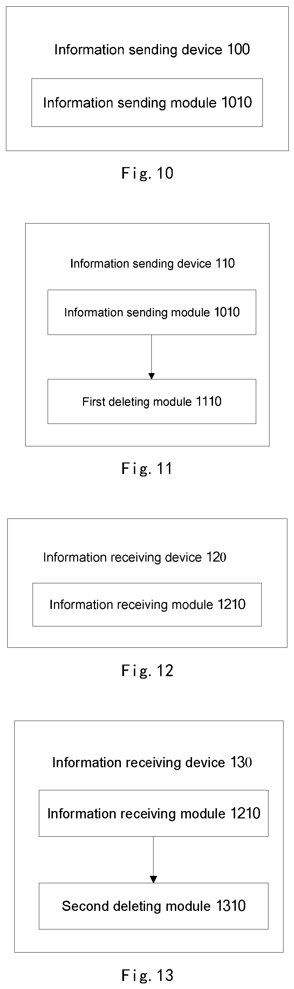

Fig. 10 is a structural block diagram of an information sending device according to an embodiment of the present disclosure. As shown in Fig. 10, the information sending device 100 includes: an information sending module 1010, configured to send information of a first function module to a second node or a third node.

In an exemplary embodiment, in the information sending module, the trigger condition for the first node to send the information of the first function module to the second node or the third node comprises at least one of the following: the second node or the third node requesting the first node to send the information of the first function module; the first node sending the information of the first function module; configuring, by means of signaling, the timing and/or the channel resources used for sending the information of the first functional module; and the first node sending the information of the first function module when performing a switching operation.

In an exemplary embodiment, Fig. 11 is a structural block diagram of an information sending device according to an embodiment of the present disclosure. As shown in Fig. 11, in addition to the modules in Fig. 10, the information sending device 110 further includes a first deleting module 1110, configured to complete the downloading, updating or storing of the second function module according to a first principle in cases where the storage space of the first node is insufficient for completing the downloading, updating or storing of the second function module by the first node,
the first principle comprising at least one of the following: sorting the first function modules according to the size of a storage space occupied by an existing first function module, and deleting at least one first function module ranked top, so as to complete the downloading, updating or storing of the second function modules; sorting the first function modules according to the usage degree of an existing first function module, and deleting at least one first function module ranked top, so as to complete the downloading, updating or storing of the second function modules; deleting at least one first function module or first function module set not satisfying the first condition, so as to complete the downloading, updating or storing of the second function modules; and preferentially deleting, according to the downloading, updating or storing time of the existing first function module, a first function module which has the longest time.

Another embodiment of the present disclosure further provides an information receiving device. Fig. 12 is a structural block diagram of an information receiving device according to an embodiment of the present disclosure. As shown in Fig. 12, the information receiving device 120 comprises: an information receiving module 1210, configured to receive information of a first function module from a first node.

In an exemplary embodiment, Fig. 13 is a structural block diagram of an information receiving device according to an embodiment of the present disclosure. As shown in Fig. 13, in addition to the modules in Fig. 12, the information receiving device 130 further includes a second deleting module 1310, configured to complete the downloading, updating or storing of the second function module according to the first principle in cases where the storage space of the first node is insufficient for completing the downloading, updating or storing of the second function module by the first node,
the first principle comprising at least one of the following: sorting the first function modules according to the size of a storage space occupied by an existing first function module, and deleting at least one first function module ranked top, so as to complete the downloading, updating or storing of the second function modules; sorting the first function modules according to the usage degree of an existing first function module, and deleting at least one first function module ranked top, so as to complete the downloading, updating or storing of the second function modules; deleting at least one first function module or first function module set not satisfying the first condition, so as to complete the downloading, updating or storing of the second function modules; and preferentially deleting, according to the downloading, updating or storing time of the existing first function module, a first function module which has the longest time.

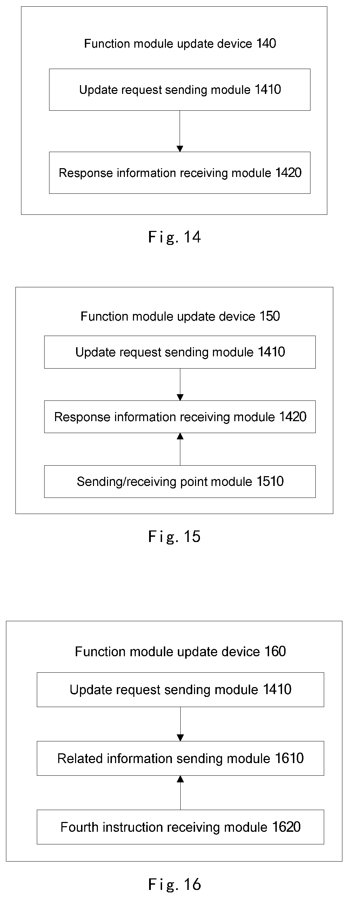

According to another embodiment of the present disclosure, also provided is a function module update device. Fig. 14 is a structural block diagram of a function module update device according to an embodiment of the present disclosure. As shown in Fig. 14, the function module update device 140 comprises: an update request sending module 1410, configured to send function module update request information to a third node; and a response information receiving module 1420, configured to receive the response information from the third node.

In an exemplary embodiment, Fig. 15 is a structural block diagram of a function module update device according to an embodiment of the present disclosure. As shown in Fig. 15, in addition to including the various modules shown in Fig. 14, the function module update device 150 further includes a sending/receiving point module 1510, configured to send function module update request information to a third node or send response information to a first node.

In an exemplary embodiment, Fig. 16 is a structural block diagram of a function module update device according to an embodiment of the present disclosure. As shown in Fig. 16, in addition to including the update request sending module 1410 shown in Fig. 14, the function module update device 160 also comprises: a related information sending module 1610, configured to send the related information of the second function module to the third node if the first node receives the third instruction information; and a fourth instruction receiving module 1620, configured to receive fourth instruction information from the third node, the fourth indication information being used for instructing to use or update the second function module.

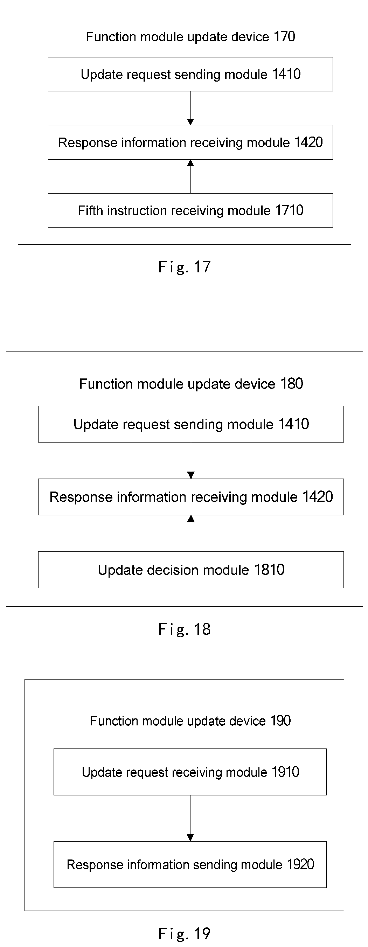

In an exemplary embodiment, Fig. 17 is a structural block diagram of a function module update device according to an embodiment of the present disclosure. As shown in Fig. 17, in addition to including the various modules shown in Fig. 14, the function module update device 170 further includes a fifth instruction receiving module 1710, configured to receive fifth instruction information from the third node, the fifth instruction information being used for instructing the first node to send the constitution information of the second function module to the third node.

In an exemplary embodiment, Fig. 18 is a structural block diagram of a function module update device according to an embodiment of the present disclosure. As shown in Fig. 18, in addition to including the various modules shown in Fig. 14, the function module update device 180 further includes an update decision module 1810, configured to make an update decision according to the response information.

According to yet another embodiment of the present disclosure, also provided is a function module update device. Fig. 19 is a structural block diagram of a function module update device according to an embodiment of the present disclosure. As shown in Fig. 19, the function module update device 190 comprises: an update request receiving module 1910, configured to receive function module update request information from a first node of a user equipment; and a response information sending module 1920, configured to send response information to the first node, so that the first node makes an update decision according to the response information.

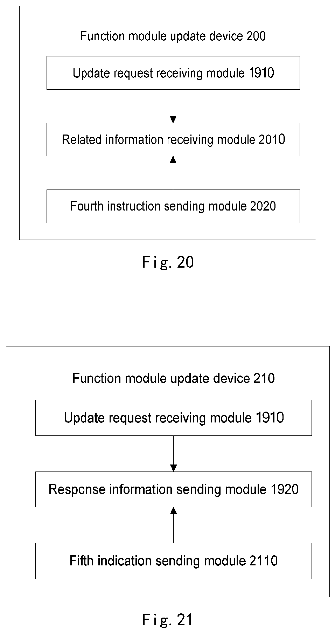

In an exemplary embodiment, Fig. 20 is a structural block diagram of a function module update device according to an embodiment of the present disclosure. As shown in Fig. 20, in addition to including the update request receiving module 1910 shown in Fig. 19, the function module update device 200 further includes: a related information receiving module 2010, configured to receive related information of the second function module from the first node if the third node sends the third instruction information to the first node; and a fourth instruction sending module 2020, configured to send fourth instruction information to the first node, the fourth indication information being used for instructing to use or update the second function module.

In an exemplary embodiment, Fig. 21 is a structural block diagram of a function module update device according to an embodiment of the present disclosure. As shown in Fig. 21, in addition to including the various modules shown in Fig. 19, the function module update device 210 further includes a fifth indication sending module 2110, configured to send fifth instruction information to the first node, the fifth instruction information being used for instructing the first node to send the construction information of the second function module to the third node.

It should be noted that the modules above may be implemented by software or hardware, and the latter may be implemented in the following manner, but is not limited thereto: the modules are located in the same processor; or the modules are located in different processors in an arbitrary combination. The embodiments of the present disclosure further provide a computer readable storage medium storing a computer program, wherein the computer program is configured to execute, when running, the steps in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic apparatus, including a memory and a processor; the memory stores a computer program, and the processor is configured to run the computer program, so as to execute the operations in any one of the method embodiments. In an exemplary embodiment, the electronic device can further comprise a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present invention can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the embodiments of the present disclosure are not limited to any specific hardware and software combinations.

In order to make those skilled in the art better understand the technical solutions of the embodiments of the present disclosure, the technical solutions of the embodiments of the present disclosure will be described below in conjunction with specific scenario embodiments.

### Scenario Embodiment 1

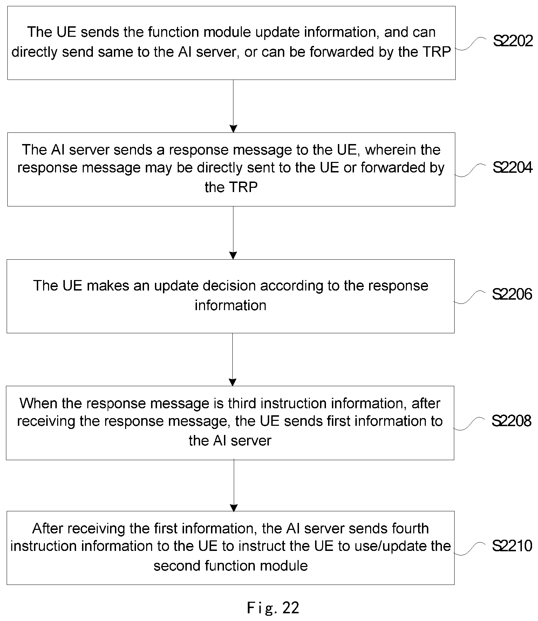

In this scenario embodiment, the second function module, i.e. the updated Al module, directly completes sending in step S2202. In this scenario embodiment, the first node is a UE, the second node is a TRP, and the third node is an Al server or an Al module. The first function module is a function module currently used, and the second function module is a function module to be used or updated. Fig. 22 is a schematic diagram illustrating the principle of a function module update method according to a scenario embodiment of the present disclosure. As shown in Fig. 2, the method comprises the following steps:
step S2202: the UE sends the function module update information, and can directly send same to the Al server, or can be forwarded by the TRP.

In this scenario embodiment, the function module update request information comprises at least one of the following: configuration information of the first function module and configuration information of the second function module,
the configuration information of the first function module comprising at least one of the following: the version number of the first function module; and description information of the function implemented by the first function module; and
the configuration information of the second function module comprising at least one of the following: the version number of the second function module; and description information of the function implemented by the second function module.

Step S2204: the Al server sends a response message to the UE, wherein the response message may be directly sent to the UE or forwarded by the TRP.

Step S2206: the UE makes an update decision according to the response information.

When the response message is "first instruction information", after receiving the response message, the UE uses/updates the second function module. When the response message is "second instruction information", after receiving the response message, the UE gives up using/updating the second function module.

The time interval from the UE receiving the response message to the UE using/updating the second function module may be configured by the Al server, or may be configured by default, or may be carried in the response message.

Step S2208: when the response message is "third instruction information", after receiving the response message, the UE sends first information to the Al server.

The first information comprises at least one of the following: security authentication information; institution authentication information; and evaluation information.

Step S2210: after receiving the first information, the Al server sends fourth instruction information to the UE to instruct the UE to use/update the second function module.

The time interval from the UE receiving the fourth instruction information to the UE using/updating the second function module may be configured by the Al server, or may be configured by default, or may be carried in the response message.

In this scenario embodiment, the second node TRP and the third node AI server may be in a same entity, and may also not be in a same entity.

In this scenario embodiment, after the function module is updated, i.e., after the second function module is updated, there will be an update effect delay, and after the update effect delay, the updated function module is used to continue the system communication.

### Scenario Embodiment 2

In this scenario embodiment, the constitution information of the second function module is not sent to the third node or the second node in the first step, instead, when the second node or the third node needs the constitution information of the second function module, the first node sends the constitution information of the second function module to the second node or the third node.

In this scenario embodiment, the first node uses a UE, the second node uses a TRP, and the third node uses an Al server. The first function module is a function module currently used, and the second function module is a function module to be used or updated.

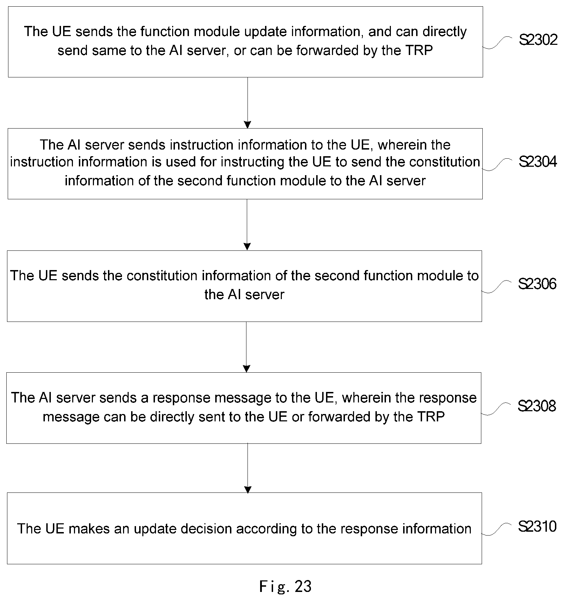

Fig. 23 is a schematic diagram illustrating the principle of a function module update method according to a scenario embodiment of the present disclosure. As shown in Fig. 23, the method comprises the following steps:
step S2302: the UE sends the function module update information, and can directly send same to the Al server, or can be forwarded by the TRP.

In this scenario embodiment, the function module update request information comprises at least one of the following: configuration information of the first function module and configuration information of the second function module,
the configuration information of the first function module comprising at least one of the following: the version number of the first function module; and description information of the function implemented by the first function module; and
the configuration information of the second function module comprising at least one of the following: the version number of the second function module; and description information of the function implemented by the second function module.

Step S2304: the AI server sends instruction information to the UE, wherein the instruction information is used for instructing the UE to send the constitution information of the second function module to the Al server.

In this step, the Al server may also directly reject the function module update request information of the UE.

Step S2306: the UE sends the constitution information of the second function module to the AI server. Step S2308: the Al server sends a response message to the UE, wherein the response message can be directly sent to the UE or forwarded by the TRP.

Step S2310: the UE makes an update decision according to the response information.

When the response message is "first instruction information", after receiving the response message, the UE uses/updates the second function module. When the response message is "second instruction information", after receiving the response message, the UE gives up using/updating the second function module.

The time interval from the UE receiving the response message to the UE using/updating the second function module may be configured by the Al server, or may be configured by default, or may be carried in the response message.

When the response message is "third instruction information", after receiving the response message, the UE sends first information to the Al server. The first information comprises at least one of the following: security authentication information; institution authentication information; and evaluation information.

After receiving the first information, the Al server sends fourth instruction information to the UE to instruct the UE to use/update the second function module.

The time interval from the UE receiving the fourth instruction information to the UE using/updating the second function module may be configured by the Al server, or may be configured by default, or may be carried in the response message.

In this scenario embodiment, the second node TRP and the third node AI server may be in a same entity, and may also not be in a same entity.

In this scenario embodiment, after the function module is updated, i.e., after the second function module is updated, there will be an update effect delay, and after the update effect delay, the updated function module is used to continue the system communication.

In conclusion, the information sending method and the information receiving method according to the embodiments of the present disclosure may be implemented before the function module update, during the function module update, or after the function module update, so as to grasp the state information of each function module, and to perform information method during the function module update.

## Claims

1. An information sending method, comprising:
sending, by a first node, information of a first function module to a second node or a third node.

2. The method according to claim 1, wherein
the second node comprises at least one of the following: a transport/receive point (TRP); and a group of TRPs;
the third node comprises at least one of the following: an artificial intelligence (AI) server; a group of Al servers; an Al memory device; a group of Al memory devices; a node having a database or a server or a memory function; and a group of nodes with a database or a server or a memory function.

3. The method according to claim 1, wherein the information of the first function module comprises at least one of the following:
instruction information of at least one of first function module sets;
statistical information of the first function module in one of the sets;
wherein the statistical information of the first function module in one of the sets comprise at least one of the following:
quantity information of the first function module;
function information supported by the first function module;
version information of the first function module;
index information of the first function module; and
acquisition mode information of the first function module.

4. The method according to claim 1, wherein the information of the first function module comprises at least one of the following:
quantity information of the first function module;
function information supported by the first function module;
version information of the first function module;
index information of the first function module; and
acquisition mode information of the first function module.

5. The method according to claim 3, wherein the first function module set and/or the first function module satisfies a first condition, the first condition comprising at least one of the following:
the second node or the third node supports the first function module set and/or the first function module;
the identification information corresponding to the first function module set and/or the first function module is the same as identification information corresponding to the second node or the third node;
the identification information corresponding to the first function module set and/or the first function module is the same as identification information corresponding to first function module set and/or first function module supported by the second node or the third node;
the identification information corresponding to the first function module set and/or the first function module is a subset of the identification information corresponding to the second node or the third node;
the identification information corresponding to the first function module set and/or the first function module is a subset of the identification information corresponding to the first function module set and/or the first function module supported by the second node or the third node;
the identification information corresponding to the first function module set and/or the first function module and the identification information corresponding to the second node or the third node are in the same identification information set; and
the identification information corresponding to the first function module set and/or the first function module and the identification information corresponding to the first function module set and/or the first function module supported by the second node or the third node are in the same identification information set.

6. **The** method according to claim 1, wherein the trigger condition for the first node to send the information of the first function module to the second node or the third node comprises at least one of the following:
requesting, by the second node or the third node, the first node to send the information of the first function module;
sending, by the first node, the information of the first function module;
configuring, by means of signaling, the timing and/or the channel resources used for sending the information of the first functional module; and
sending, by the first node, the information of the first function module when performing a switching operation.

7. **The** method according to claim 6, wherein the first node sending the information of the first function module when performing a switching operation, and the first function module set and/or the first function module sent by the first node satisfies a second condition, the second condition comprising at least one of the following:
the switched target second node or third node supports the first function module set and/or the first function module;
the identification information corresponding to the first function module set and/or the first function module is the same as identification information corresponding to the switched target second node or the third node;
the identification information corresponding to the first function module set and/or the first function module is the same as identification information corresponding to first function module set and/or first function module supported by the switched target second node or the third node; the identification information corresponding to the first function module set and/or the first function module is a subset of the identification information corresponding to the switched target second node or the third node;
the identification information corresponding to the first function module set and/or the first function module is a subset of the identification information corresponding to the first function module set and/or the first function module supported by the switched target second node or the third node;
the identification information corresponding to the first function module set and/or the first function module and the identification information corresponding to the target second node or third node are in the same identification information set; and
the identification information corresponding to the first function module set and/or the first function module and the identification information corresponding to the first function module set and/or the first function module supported by the target second node or third node are in the same identification information set.

8. The method according to claim 1, further comprising: completing the downloading, updating or storing of the second function module according to a first principle in cases where the storage space of the first node is insufficient for completing the downloading, updating or storing of the second function module by the first node, the first principle comprising at least one of the following:
sorting the first function modules according to the size of a storage space occupied by an existing first function module, and deleting at least one first function module ranked top, so as to complete the downloading, updating or storing of the second function modules;
sorting the first function modules according to the usage degree of an existing first function module, and deleting at least one first function module ranked top, so as to complete the downloading, updating or storing of the second function modules;
deleting at least one first function module or first function module set not satisfying the first condition, so as to complete the downloading, updating or storing of the second function modules; and
preferentially deleting, according to the downloading, updating or storing time of the existing first function module, a first function module which has the longest time.

9. An information receiving method, comprising:
receiving, by the second node or the third node, information of the first function module from the first node.

10. The method according to claim 9, wherein the second node comprises at least one of the following: a transport/receive point (TRP); and a group of TRPs;
the third node comprises at least one of the following: an artificial intelligence (AI) server; a group of Al servers; an Al memory device; a group of Al memory devices; a node having a database/server/memory function; and a group of nodes with a database/server/memory function.

11. The method according to claim 9, wherein the information of the first function module comprises at least one of the following:
instruction information of at least one of first function module sets;
statistical information of the first function module in one of the sets;
wherein the statistical information of the first function module in one of the sets may comprise at least one of the following:
quantity information of the first function module;
function information supported by the first function module;
version information of the first function module;
index information of the first function module; and
acquisition mode information of the first function module.

12. The method according to claim 9, wherein the information of the first function module comprises at least one of the following:
quantity information of the first function module;
function information supported by the first function module;
version information of the first function module;
index information of the first function module; and
acquisition mode information of the first function module.

13. The method according to claim 11, wherein the first function module set and/or the first function module satisfies a first condition, the first condition comprising at least one of the following:
the second node or the third node supports the first function module set and/or the first function module;
the identification information corresponding to the first function module set and/or the first function module is the same as identification information corresponding to the second node or the third node;
the identification information corresponding to the first function module set and/or the first function module is the same as identification information corresponding to first function module set and/or first function module supported by the second node or the third node;
the identification information corresponding to the first function module set and/or the first function module is a subset of the identification information corresponding to the second node or the third node;
the identification information corresponding to the first function module set and/or the first function module is a subset of the identification information corresponding to the first function module set and/or the first function module supported by the second node or the third node;
the identification information corresponding to the first function module set and/or the first function module and the identification information corresponding to the second node or the third node are in the same identification information set; and
the identification information corresponding to the first function module set and/or the first function module and the identification information corresponding to the first function module set and/or the first function module supported by the second node or the third node are in the same identification information set.

14. The method according to claim 9, wherein the trigger condition for the second node or third node to receive the information of the first function module from the first node comprises at least one of the following:
requesting, by the second node or the third node, the first node to send the information of the first function module;
sending, by the first node, the information of the first function module;
configuring, by means of signaling, the timing and/or the channel resources used for sending the information of the first functional module; and
sending, by the first node, the information of the first function module when performing a switching operation.

15. The method according to claim 14, wherein the first node sending the information of the first function module when performing a switching operation, and the first function module set and/or the first function module sent by the first node satisfies a second condition, the second condition comprising at least one of the following:
the switched target second node or third node supports the first function module set and/or the first function module;
the identification information corresponding to the first function module set and/or the first function module is the same as identification information corresponding to the switched target second node or the third node;
the identification information corresponding to the first function module set and/or the first function module is the same as identification information corresponding to first function module set and/or first function module supported by the switched target second node or the third node;
the identification information corresponding to the first function module set and/or the first function module is a subset of the identification information corresponding to the switched target second node or the third node;
the identification information corresponding to the first function module set and/or the first function module is a subset of the identification information corresponding to the first function module set and/or the first function module supported by the switched target second node or the third node;
the identification information corresponding to the first function module set and/or the first function module and the identification information corresponding to the target second node or third node are in the same identification information set; and
the identification information corresponding to the first function module set and/or the first function module and the identification information corresponding to the first function module set and/or the first function module supported by the target second node or third node are in the same identification information set.

16. A function module update method, comprising:
sending, by a first node, function module update request information to a third node; and
receiving, by the first node, response information from the third node, so as to make an update decision according to the response information.

17. The method according to claim 16, wherein the third node comprises at least one of the following:
an artificial intelligence (AI) server;
a group of AI servers;
an Al memory device;
a group of AI memory devices;
a node having a database or a server or a memory function; and
a group of nodes with database or a server or a memory function.

18. The method according to claim 16, wherein a first node sending function module update request information to a third node comprises:
forwarding, by the first node, the function module update request information to the third node by means of the second node;
or the first node directly sending the function module update request information to the third node.

19. The method according to claim 18, wherein the second node comprises at least one of the following:
a transport/receive point (TRP); and
a group of TRPs.

20. The method according to claim 16, wherein the function module update request information comprises at least one of the following: configuration information of the first function module and configuration information of the second function module,
the configuration information of the first function module comprising at least one of the following:
the version number of the first function module; and description information of the function implemented by the first function module; and
the configuration information of the second function module comprising at least one of the following: the version number of the second function module; and description information of the function implemented by the second function module.

21. The method according to claim 20, wherein
the description information of the function implemented by the first function module comprises at least one of the following:
terminal type information supported by the first function module;
system configuration information required by the first function module and supported by the terminal;
communication configuration information required by the first function module and supported by the terminal;
input information required by the first function module; and
output information supported by the first function module;
the description information of the function implemented by the second function module comprises at least one of the following:
terminal type information supported by the second function module;
system configuration information required by the second function module and supported by the terminal;
communication configuration information required by the second function module and supported by the terminal;
input information required by the second function module; and
output information supported by the second function module.

22. The method according to claim 16, wherein the response information comprises one of the following:
first instruction information for instructing to use or update the second function module;
second instruction information for instructing to not use or update the second function module; and
third instruction information for instructing the first node to send related information of the second function module.

23. The method according to claim 22, wherein the related information comprises at least one of the following:
security authentication information;
institution authentication information; and
evaluation information.

24. The method according to claim 16, wherein before the first node makes an update decision according to the response information, the method further comprises:
in a case that the first node receives the third instruction information, sending, by the first node, the related information of the second function module to the third node; and
receiving, by the first node, fourth instruction information from the third node, the fourth indication information being used for instructing to use or update the second function module.

25. The method according to claim 16, wherein the function module update request information comprises at least one of the following: configuration information of the first function module and configuration information of the second function module,
the configuration information of the first function module comprising at least one of the following:
the version number of the first function module; and description information of the function implemented by the first function module; and
the configuration information of the second function module comprising at least one of the following: the version number of the second function module; and description information of the function implemented by the second function module.

26. The method according to claim 25, wherein before the first node receives the response information from the third node, the method further comprises:
receiving, by the first node, fifth instruction information from the third node, the fifth instruction information being used for instructing the first node to send the constitution information of the second function module to the third node.

27. The method according to claim 16, wherein the first node making an update decision according to the response information comprises:
after receiving the response information for a certain time interval, making, by the first node, an update decision according to the response information, the time interval being configured by default, or being configured by the third node, or being carried by the response information.

28. A function module update method, comprising:
receiving, by a third node, function module update request information from a first node; and
sending, by the third node, response information to the first node, so that the first node makes an update decision according to the response information.

29. The method according to claim 28, wherein the third node comprises at least one of the following:
an artificial intelligence (AI) server;
a group of AI servers;
an Al memory device;
a group of AI memory devices;
a node having a database or a server or a memory function; and
a group of nodes with database or a server or a memory function.

30. The method according to claim 28, wherein the third node receiving the function module update request information from the first node comprises:
receiving, by the third node, the function module update request information from the first node by means of a second node; or
directly receiving, by the third node, the function module update request information from the first node.

31. The method according to claim 28, wherein the function module update request information comprises at least one of the following: configuration information of the first function module and configuration information of the second function module,
the configuration information of the first function module comprising at least one of the following:
the version number of the first function module; and description information of the function implemented by the first function module; and
the configuration information of the second function module comprising at least one of the following: the version number of the second function module; and description information of the function implemented by the second function module.

32. The method according to claim 28, wherein the response information comprises one of:
first instruction information for instructing to use or update the second function module;
second instruction information for instructing to not use or update the second function module; and
third instruction information for instructing the first node to send related information of the second function module.

33. The method according to claim 28, wherein after the third node sends the response information to the first node, the method further comprises:
in a case that the third node sends the third instruction information to the first node, receiving, by the third node, related information of the second function module from the first node; and
sending, by the third node, fourth instruction information to the first node, the fourth indication information being used for instructing to use or update the second function module.

34. The method according to claim 28, wherein the function module update request information comprises at least one of the following: configuration information of the first function module and configuration information of the second function module,
the configuration information of the first function module comprising at least one of the following:
the version number of the first function module; and description information of the function implemented by the first function module; and
the configuration information of the second function module comprising at least one of the following: the version number of the second function module; and description information of the function implemented by the second function module.

35. The method according to claim 28, wherein before the third node sends the response information to the first node, the method further comprises:
sending, by the third node, fifth instruction information to the first node, the fifth instruction information being used for instructing the first node to send the constitution information of the second function module to the third node.

36. A computer readable storage medium, storing a computer program, wherein the computer program is configured to, when being executed by a processor, implement the method according to any one of claims 1 to 35.

37. An electronic device, comprising a memory, a processor, and a computer program stored in the memory and run on the processor, wherein the processor is configured to execute the computer program to implement the steps of the method according to any one of claims 1 to 35.
